# EUROPEAN PATENT SPECIFICATION

(11) **EP 4 100 467 B1**
(45) Date of publication and mention of the grant of the patent: **31.01.2024**
(21) Application number: 21708811.1
(22) Date of filing: 02.02.2021
(51) Int. Cl.: C08G 69/40, C08K 5/00, C08K 3/013, C08L 77/02, C09C 3/10, C08G 65/333

(54) **THERMOPLASTIC COMPOSITION**
THERMOPLASTISCHE ZUSAMMENSETZUNG
COMPOSITION THERMOPLASTIQUE

(30) Priority: 03.02.2020 US 202062969265 P
(43) Date of publication of application: 14.12.2022
(73) Proprietor: Lubrizol Advanced Materials, Inc., Cleveland, OH 44141-3247 (US)
(72) Inventor: COULBECK, Elliot, Manchester, Lancashire M9 8ZS (GB); GREEN, Sa a, Manchester, Lancashire M9 8ZS (GB); THETFORD, Dean, Manchester, Lancashire M9 8ZS (GB)
(74) Representative: Bradley, Josephine Mary
(86) International application number: PCT/US2021/016125
(87) International publication number: WO 2021/158497

(56) References cited:
- US-A- 3 875 197
- US-A1- 2008 207 828
- US-A1- 2011 041 730
- US-A1- 2015 148 476
- US-A1- 2020 002 539

## Description

### TECHNICAL FIELD

The invention relates to a composition containing a particulate solid, a plastic material (such as a thermoplastic polymer) and a polymer. The polymer may be capable of being a dispersant.

### BACKGROUND

Thermoplastics such as polypropylene, polyethylene, etc., are typically colored using pigment concentrates. The pigment concentrates may be referred to as masterbatches. These concentrates are prepared by mixing ingredients together and subjecting them to any of the processes commonly used for dispersing particulate solids in a plastic material, such as a thermoplastic polymer. Compounding or mixing in a twin-screw extruder is one such process. Masterbatches may contain up to 70% of pigment, and optionally other additives. Other additives may include waxes, dispersants, lubricants and/or UV stabilizers.

Production of masterbatches typically utilizes a pigment dispersed in a plastic material, such as a thermoplastic polymer, to ideally form fine particles with limited amounts of aggregates. However, aggregates are known to form from the pigments in the production of masterbatches. The presence of pigment aggregates may result in filter blocking of the extruder.

In addition, particular requirements are important for finished articles containing a thermoplastic polymer. The thermoplastic polymer may be in the form of, for example, a solid article, a film, or a fiber. In solid articles, acceptable dispersion of the pigment is necessary in order to maximize color development, maximize tinctorial strength and/or reduce speck levels. For films, incomplete dispersion of the pigment may lead to cracking, unwanted light scattering effects, and/or specks. In fibers, incomplete dispersion of the pigment may result in fiber breakage.

Previous work has been conducted to provide dispersants for pigments used in plastic materials, such as thermoplastic polymers. Conventional dispersants are becoming, or may become, undesirable, such as because of increased regulatory scrutiny of non-polymeric dispersants. US 2015/148476 A1 discloses compounds that are capable of at least one of improving colour strength, other tinctorial properties, increasing a particulate solid load, forming improved dispersions, having improved brightness, producing a composition with reduced viscosity, maintain stable dispersion, reduced particle size and reduced particle size distribution (typically reduced to an average of 150 nm or less, for example in the range of 70-135 nm), reduced haze, improved gloss, and increased jetness (especially when the composition is black). The polymer used as dispersant is a polyetheramine whose amine groups react with anhydride to form imide groups

The disclosed technology, therefore, provides compositions which are able to reduce or minimize at least one of any of the technical challenges discussed above. These challenges may lead to less efficient processing in expensive extruder-type equipment, causing production costs to increase. The present subject matter therefore identifies polymers, and compositions including the polymers, wherein the polymers are capable of dispersing a pigment allowing a thermoplastic to have at least one of: (i) a reduction in aggregates and/or specks; (ii) a finer state of dispersion (for example, having a lower filter pressure value); (iii) acceptable/improved tinctorial strength and/or improved brightness; (iv) faster rates of dispersion; or (v) a polymeric dispersant.

### SUMMARY

The subject matter disclosed herein provides a composition comprising a particulate solid, a plastic material and a polymer represented by the formula A-(B)ₙ, wherein: A is a residue of a polyether having a polyether segment and 2 or 3 amine groups; each B is independently a residue of a fatty acid or fatty acid anhydride; and n is 2 or 3; wherein each B is independently bound to A (such as via amide or imide linkage). In certain embodiments, the polyether segment is derived from monomers of at least one of ethylene oxide, propylene oxide, or tetrahydrofuran. In certain embodiments, the polyether segment has a number average molecular weight of from 200 to 2000. In certain embodiments, the amine groups are primary or secondary. In certain embodiments, the fatty acid or fatty acid anhydride is a C₆-C₅₀ fatty acid or fatty acid anhydride. In certain embodiments, the fatty acid or fatty acid anhydride is linear or branched, saturated or unsaturated. In certain embodiments, each B is independently bound to A by an amide bond or a cyclic imide group.

Also provided is use of a polymer represented by the formula A-(B)ₙ as a dispersant in a composition further comprising a particulate solid and a plastic material, wherein: A is a residue of a polyether having a polyether segment and 2 or 3 amine groups; each B is independently a residue of a fatty acid or fatty acid anhydride; and n is 2 or 3; wherein each B is independently bound to A. In certain embodiments, the polyether segment is derived from monomers of at least one of ethylene oxide, propylene oxide, or tetrahydrofuran. In certain embodiments, the polyether segment has a number average molecular weight of from 160 to 2000. In certain embodiments, the amine groups are primary or secondary. In certain embodiments, the fatty acid or fatty acid anhydride is a C₆-C₅₀ fatty acid or fatty acid anhydride. In certain embodiments, the fatty acid or fatty acid anhydride is linear or branched, saturated or unsaturated. In certain embodiments, each B is independently bound to A by an amide bond or a cyclic imide group.

The following embodiments of the present subject matter are contemplated:
1. A composition comprising a particulate solid, a plastic material and a polymer represented by formula (1):

   A-(B)ₙ (1)

   wherein:
   A is a residue of a polyether having a polyether segment and 2 or 3 amine groups; wherein the polyether segment is derived from monomers of at least one of ethylene oxide, propylene oxide, or tetrahydrofuran; wherein the polyether segment has a number average molecular weight of from 160 to 2000; and wherein the amine groups are primary or secondary;
   each B is independently a residue of a C₆-C₅₀ fatty acid or fatty acid anhydride, which is linear or branched, and which is saturated or unsaturated; and
   n is 2 or 3;
   wherein each B is independently bound to A by an amide bond or a cyclic imide group.
2. The composition of embodiment 1, wherein the plastic material is a thermoplastic polymer.
3. The composition of either of embodiment 1 or embodiment 2, wherein the particulate solid is at least one of a pigment, an extender, a filler, a flame-retardant material, a ceramic material, a magnetic material, or metal particles.
4. The composition of any one of embodiments 1 to 3, wherein the particulate solid is present in the composition in an amount of 1 wt. % to 95 wt. %, based on the total weight of the composition.
5. The composition of any one of embodiments 1 to 4, wherein the polymer of formula (1) is present in an amount of 0.1 wt. % to 50 wt. %, based on the total weight of the composition.
6. The composition of any one of embodiments 1 to 5, wherein the polymer of formula (1) has an acid value of less than 20 mg KOH/g.
7. The composition of any one of embodiments 1 to 6, wherein the polymer of formula (1) has an amine value of less than 10 mg KOH/g.
8. Use of a polymer represented by formula (1) as a dispersant in a composition further comprising a particulate solid and a plastic material:

   A-(B)ₙ (1)

   wherein:
   A is a residue of a polyether having a polyether segment and 2 or 3 amine groups; wherein the polyether segment is derived from monomers of at least one of ethylene oxide, propylene oxide, or tetrahydrofuran; wherein the polyether segment has a number average molecular weight of from 200 to 2000; and wherein the amine groups are primary or secondary;
   each B is independently a residue of a C₆-C₅₀ fatty acid or fatty acid anhydride, which is linear or branched, and which is saturated or unsaturated; and
   n is 2 or 3;
   wherein each B is independently bound to A by an amide bond or a cyclic imide group.

### DETAILED DESCRIPTION

Various features and embodiments of the present subject matter will be described below by way of non-limiting illustration.

The amount of each chemical component described herein is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

It is known that some of the materials described herein may interact in the final formulation, so that the components of the final formulation may be different from those that are initially added. For instance, metal ions (of, e.g., a detergent) may migrate to other acidic or anionic sites of other molecules. The products formed thereby, including the products formed upon employing the composition of the present subject matter in its intended use, may not be susceptible of easy description. Nevertheless, all such modifications and reaction products are included within the scope of the present subject matter; the present subject matter encompasses the composition prepared by admixing the components described herein.

Provided is a composition comprising a particulate solid, a plastic material and a polymer represented by formula (1):

A-(B)ₙ (1)

wherein: A is a residue of a polyether having a polyether segment and 2 or 3 amine groups; wherein the polyether segment is derived from monomers of at least one of ethylene oxide, propylene oxide, or tetrahydrofuran; wherein the polyether segment has a number average molecular weight of from 200 to 2000; and wherein the amine groups are primary or secondary; each B is independently a residue of a C₆-C₅₀ fatty acid or fatty acid anhydride, which is linear or branched, and which is saturated or unsaturated; and n is 2 or 3; wherein each B is independently bound to A by an amide bond or a cyclic imide group.

When referring to component A of formula (1), the term "residue" means that the amine groups have lost hydrogen atoms such that the amine groups are able to bond to B. Also, in the context of the polyether segment, "derived from" means that the polyether segment is made up of the stated monomers bound together to form the polyether segment, as is known to those of skill in the art. When referring to component B of formula (1), the term "residue" means that each fatty acid/anhydride is bound to component A such that a small molecule is lost as the bond between A and B is formed.

Unless explicitly stated otherwise, as used herein, "number average molecular weight" means the number average molecular weight determined via titration of end groups, such as amine groups, as is known in the art. For example, a known mass of an amine-containing species is dissolved in a suitable solvent or solvent mixture, and then titrated on a model 904 Titrando titrator (Metrohm) using 0.1 M perchloric acid in glacial acetic acid as the titrant, and using a Solvotrode electrode (Metrohm) with lithium chloride salt in ethanol electrolyte.

In certain embodiments, when n is 2, component A has 2 amine groups, and/or when n is 3, component A has 3 amine groups. In certain embodiments, component A has 2 amine groups and n is 2. In certain embodiments, component A has 3 amine groups, and n is 2 or 3. In certain embodiments, component A has 3 amine groups and n is 3.

In certain embodiments, the polyether segment has a number average molecular weight of from 160 (such as 170, 180, 190, 200, 210, 220, 230, 240, 250, 300, 350, 400, 450, 500, 550, 600, 650, 700, 750, 800, 850, 900 or 950) to 2000 (such as 1900, 1800, 1700, 1600, 1500, 1400, 1300, 1200, 1100 or 1000). In certain embodiments, the polyether segment has a number average molecular weight of from 170 (such as 180, 190, 200, 210, 220, 230, 240, 250, 260, 270, 280, 290, 300, 350, 400, 350, 500, 550, 600, 650, or 700) to 1700 (such as 1600, 1500, 1400, 1300, 1200, 1100, 1000, 950, 900, 850, 800, or 750). In certain embodiments, the polyether segment has a number average molecular weight of from 180 (such as 190, 200, 210, 220, 230, 240, 250, 260, 270, 280, 290, 300, 350, 400, or 450) to 1500 (such as 1400, 1300, 1200, 1100, 100, 900, 800, 700, 600, or 500). In certain embodiments, the polyether segment has a number average molecular weight of from 190 (such as 200, 210, 220, 230, 240, 250, 260, 270, 280, 290, 300, 310, 320, 330, 340, 350, 360, 370, 380, or 390) to 1000 (such as 950, 900, 850, 800, 750, 700, 650, 600, 550, 500, 490, 480, 470, 460, 450, 440, 430, 420, 410, or 400).

In certain embodiments, in which the polyether segment includes two or more of the ethylene oxide, propylene oxide, or tetrahydrofuran monomers, the monomers may form random (the monomers are more or less randomly connected to each other) or block-like (each monomer is mostly connected to the same monomer) polymer structures. These types of polyether structures are known to those of skill in the art.

Suitable materials which may be used to derive component A include Polypropylene glycol) bis(2-aminopropyl ether), O,O'-Bis(2-aminopropyl) polypropylene glycol-block-polyethylene glycol-block-polypropylene glycol, Poly(tetrahydrofuran) bis(3-aminopropyl) terminated. Suitable commercially-available materials which may be used to derive component A include Jeffamine D series (D-400, D2000) from Huntsman or Jeffamine ED series (ED-600, ED-900, ED-2003) from Huntsman for where A contains 2 amines; Jeffamine T-403 from Huntsman where A contains 3 amines.

In certain embodiments, materials from which component A may be derived may be represented by the following chemical structures:

A suitable example of component A containing two amines may be derived from materials represented by formula (2):

H₂N-[CₓH₂ₓ-O]ₘ-CₓH₂ₓ-NH₂ (2)

A suitable example of component A containing three amines may be derived from materials represented by formula (3):

R‴-(O-[CₓH₂ₓ-O]ₜ-CₓH₂ₓ-NH₂)₃ (3)

In each of formulas (2) and (3), x is independently 2, 3 or 4, m is 3 to 43, t is independently 1 to 15, and R‴ is a C₃₋₁₀ carbon chain, such as a C₃₋₆ carbon chain (optionally branched).

A non-limiting example of a suitable component A containing two amines is:

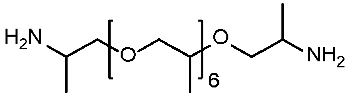

A non-limiting example of a suitable component A containing three amines is:

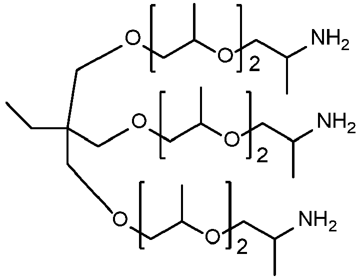

In certain embodiments, each B is independently a residue of a C₆ (such as C₈, C₁₀, C₁₂, C₁₄, C₁₆, C₁₈, or C₂₀) to C₅₀ (such as C₄₈, C₄₆, C₄₄, C₄₂, C₄₀, C₃₈, C₃₆, C₃₄, C₃₂, C₃₀, C₂₈, C₂₆, C₂₄, or C₂₂) fatty acid or fatty acid anhydride. In certain embodiments, each B is independently a residue of a C₆-C₅₀ (such as C₈-C₃₆, C₁₀ to C₃₀, or C₁₂-C₂₂) fatty acid or fatty acid anhydride.

In certain embodiments, the fatty acid/anhydride of component B of formula (1) may be substituted, such as with at least one hydroxyl group. In certain embodiments, the fatty acid/anhydride of component B of formula (1) may be unsaturated, such as monounsaturated or polyunsaturated (such as having two or three double bonds).

In certain embodiments, each B may be the same or different. In certain embodiments, each B is the same. In certain embodiments, each B is different. In embodiments in which there are 3 B units, two of them may be the same with the third being different from the other two.

Suitable examples of materials, and/or commercially available materials, which may be used to derive component B include: fatty acids and/or their methyl/ethyl esters including myristic acid, oleic acid, palmitic acid, erucic acid, behenic acid, Versatic^{™} acid 911 (a C₉₋₁₁-branched fatty acid), Versatic^{™} acid 10 (tert-decanoic acid), ricinoleic acid, 12-hydroxystearic acid, 9,11-linoleic acid, 9,12-linoleic acid, 9,12,15-linolenic acid, abietic acid, hexanoic acid, octanoic acid, lauric acid, decanoic acid, stearic acid, isostearic acid, 2-ethylbutyric acid, 2-ethylhexanoic acid, 2-butyloctanoic acid, 2-hexyldecanoic acid, 2-octyldodecanoic acid and 2-decyltetradecanoic acid; branched alkyl carboxylic acids of this type are available under the trade mark Isocarb^{®} (from Sasol GmbH) and specific examples are Isocarb^{®} 12, 16, 20, 28, 32, 34T and 36; many carboxylic acids are available commercially as mixtures; mixtures of fatty acids derived from oils from naturally occurring sources such as sunflower oil, olive oil, rapeseed oil, castor oil, palm oil, coconut oil, linseed oil, soya bean oil, fish oil and the like, in either a hydrogenated (saturated) or unsaturated form; the Unicid^{®} acids (linear primary synthetic carboxylic acids) commercially available from Baker Petrolite Polymer Division; and/or fatty acid anhydrides including dodecyl succinic anhydride, hexadecyl succinic anhydride, octadecyl succinic anhydride, dodecenyl succinic anhydride, hexadecenyl succinic anhydride, octadecenyl succinic anhydride, and mixtures thereof.

In certain embodiments, materials from which component B may be derived may be represented by the following chemical structures:

Suitable fatty acids for use in deriving component B may be represented by formula (4):

R-COOR' (4)

where R is a C₆₋₅₀ structured or unsaturated, branched or linear carbon chain optionally having a single OH substituent, and R' is H, CH₃, or CH₂CH₃.

Suitable fatty acid anhydrides for use in deriving component B may be represented by formula (5): 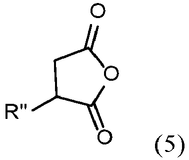 where R" is a C₆₋₅₀ saturated or unsaturated, branched or linear carbon chain.

A non-limiting example of a suitable fatty acid is: CH₃(CH₂)₁₆COOH.

A non-limiting example of a suitable fatty acid anhydride is:

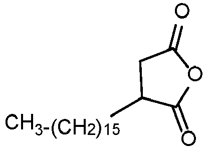

An illustrative, non-limiting reaction scheme for forming a suitable polymer of formula (1) is to use the following as an exemplary component A: 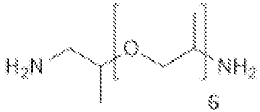 and the following as an exemplary component B: 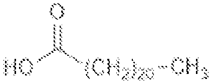 and, by reacting one equivalent of component A with two equivalents of component B, form the following as an exemplary polymer of formula (1):

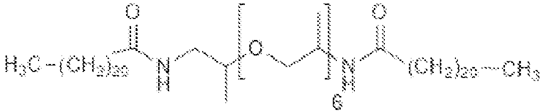

In certain embodiments, the polymer of formula (1) may be represented by the following chemical structures:

In certain non-limiting examples, the following generic formula represents embodiments of formula (1) in which component B is a residue of a fatty acid and component A is a residue of a diamine, where R, m and x have the meanings provided above:

R-C(O)-N(H)-[CₓH₂ₓ-O]ₘ-CₓH₂ₓ-N(H)-C(O)-R

In certain non-limiting examples, the following generic formula represents embodiments of formula (1) in which component B is a residue of a fatty acid anhydride and component A is a reside of a diamine, where R", x and m have the meanings provided above:

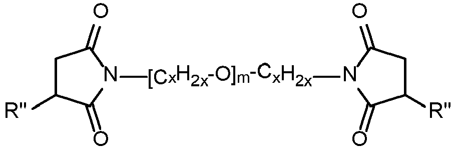

In certain non-limiting examples, the following generic formula represents embodiments of formula (1) in which component B is a residue of a fatty acid and component A is a residue of a triamine, where R‴, x, t and R have the meanings provided above:

R‴-(O-[CₓH₂ₓ-O]ₜ-CₓH₂ₓ-N(H)-C(O)-R)₃

In certain non-limiting embodiments, the following generic formula represents embodiments of formula (1) in which component B is a residue of a fatty acid anhydride and component A is a residue of a triamine, where R"', x, t, and R" have the meanings provided above:

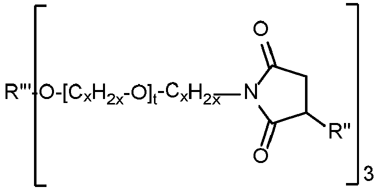

In the illustrative embodiments described above, it is noted that certain of the generic formulae are symmetrical. In these embodiments, the structures need not be symmetrical, in that each of the residues derived from component B could be the same or different, and thus the component B on each molecule may be interchangeable with other component B residues.

In certain embodiments, the plastic material may be a thermoplastic polymer.

In certain embodiments, the particulate solid may be at least one of a pigment, an extender, a filler, a flame-retardant material, a ceramic material, a magnetic material, or metal particles.

In certain embodiments, the polymer of formula (1) may have an acid value of less than 20 (such as 19, 18, 17, 16, 15, 14, 13, 12, 11, 10, 9, 8, 7, 6, or 5) mg KOH/g. In certain embodiments, the polymer of formula (1) may have an amine value of less than 10 (such as 9, 8, 7, 6, 5, 4, 3, 2, or 1) mg KOH/g. This may be due to small amounts of residual acid or basic functionality, and/or may occur by either the reaction to make the compound of formula (1) not progressing to 100% completion, or their being a slight molar difference between the amount of amines and fatty acid or fatty acid anhydride.

In certain embodiments, the plastic material may comprise at least one of: (i) an amorphous poly-α-olefin, optionally present in an amount of up to 90 wt. %, based on the total weight of the composition; (ii) a wax, optionally present in an amount of up to 90 wt. %, based on the total weight of the composition; (iii) a crystalline polyolefin, optionally present in an amount of up to 30 wt. %, based on the total weight of the composition; or (iv) a hydrogenated castor oil wax, optionally present in an amount of up to 75 wt. %, based on the total weight of the composition; optionally with the proviso that at least one of (i) or (ii) is present in an amount of at least 0.1 wt. %, based on the total weight of the composition.

In certain embodiments, the amorphous poly-α-olefin may be a polyethylene/ polypropylene mixture.

Also provided is use of a polymer represented by formula (1) as a dispersant in a composition further comprising a particulate solid and a plastic material:

A-(B)ₙ (1)

wherein: A is a residue of a polyether having a polyether segment and 2 or 3 amine groups; wherein the polyether segment is derived from monomers of at least one of ethylene oxide, propylene oxide, or tetrahydrofuran; wherein the polyether segment has a number average molecular weight of from 200 to 2000; and wherein the amine groups are primary or secondary; each B is independently a residue of a C₆-C₅₀ fatty acid or fatty acid anhydride, which is linear or branched, and which is saturated or unsaturated; and n is 2 or 3; wherein each B is independently bound to A by an amide bond or a cyclic imide group. The embodiments of the composition described above apply equally to the use embodiments described in this paragraph.

Also provided are methods of dispersing a particulate solid in a plastic material using the polymer represented by formula (1) as described above. For example, the polymer, particulate solid and plastic material may be mixed together in any order to form a composition as described in the various embodiments provided above. In certain embodiments, the ingredients may be mixed together such that the particulate solid is added to the mixture last.

In certain embodiments, the polymers of any of the embodiments described above may be suitable for use as a processing aid or dispersant for particulate solids, such as pigment materials, incorporated into compositions, for example plastic materials, such as thermoplastic polymers.

In certain embodiments, the polymers described herein may be present in such compositions in an amount of 0.1 wt. % (such as 0.2, 0.3, 0.4, 0.5, 0.6, 0.7, 0.8, 0.9, 1, 1.5, 2, 2.5, 3, 3.5, 4, 4.5, 5, 6, 7, 8, 9, 10, 15, 20, or 25 wt. %) to 50 wt. % (such as 45, 40, 35, or 30 wt. %), based on the total weight of the composition.

In certain embodiments, the particulate solid present in the compositions may be any inorganic or organic solid material. In certain embodiments, the particulate solid is a pigment, such as an inorganic pigment or an organic pigment.

In certain embodiments, the particulate solid may be an organic pigment, such as any of the recognized classes of pigments described in the Third Edition of the Colour Index (1971) and subsequent revisions of, and supplements thereto, under the chapter entitled "Pigmnets".

Non-limiting examples of suitable organic pigments are at least one pigment from the azo, disazo, trisazo, condensed azo, azo lakes, naphthol, anthrapyrimidine, benzimidazolone, carbazole, diketopyrrolopyrrole, flavanthrone, indigoid, isoindolinone, isoindoline, isoviolanthrone, metal complex, oxazine, perylene, perinone, pyranthrone, pyrazoloquinazolone, quinophthalone, triarylcarbonium, triphendioxazine, xanthene, thioindigo, indanthrone, isoindanthrone, anthanthrone, anthraquinone, isodibenzanthrone, triphendioxazine, quinacridone, or phthalocyanine pigment series, and/or lakes of acid, basic and mordant dyes, and carbon black. In certain embodiments, the organic pigment is at least one of phthalocyanines, such as copper phthalocyanine and/or its nuclear halogenated derivatives, monoazos, disazos, indanthrones, anthranthrones, quinacridones, diketopyrrolopyrroles, perylenes, or carbon black.

In certain embodiments, the inorganic particulate solids may include at least one of: extenders and/or fillers, such as talc, kaolin, montmorillonites including bentonites, hectorites, saponites, mica, silica, barytes, chalk; flame-retardant fillers, such as alumina trihydrate, natural magnesium hydroxide, or brucite; particulate ceramic materials, such as alumina, silica, zirconia, titania, silicon nitride, boron nitride, silicon carbide, boron carbide, mixed silicon-aluminum nitrides, and/or metal titanates; particulate magnetic materials, such as the magnetic oxides of transition metals, such as iron and chromium (e.g., gamma-Fe₂O₃, Fe₃O₄, and cobalt-doped iron oxides), calcium oxide, ferrites, such as barium ferrites; and/or metal particles, such as iron, nickel, cobalt, copper and alloys thereof.

Non-limiting examples of suitable inorganic pigments include at least one of metallic oxides, such as titanium dioxide (e.g., rutile titanium dioxide and/or surface-coated titanium dioxide), titanium oxides of different colors (such as yellow and black), iron oxides of different colors (such as yellow, red, brown and black), zinc oxide, zirconium oxide, aluminum oxide, oxymetallic compounds (such as bismuth vanadate, cobalt aluminate, cobalt stannate, cobalt zincate, zinc chromate and mixed metal oxides of manganese, nickel, titanium, chromium, antimony, magnesium, cobalt, iron and aluminum), Prussian blue, vermillion, ultramarine, zinc phosphate, zinc sulphide, molybdates and chromates of calcium and zinc, metal-effect pigments (such as aluminum flake, copper, and copper/zinc alloy), or pearlescent flake (such as lead carbonate and bismuth oxychloride).

In certain embodiments, thermoplastic polymers (such as thermoplastic resins) which may be included in the compositions described herein may include at least one of polyolefins, polyesters, polyamides, polycarbonates, polyurethanes, polystyrenics, poly(meth)acrylates, celluloses, or cellulose derivatives. These compositions may be prepared in a number of ways, such as by melt mixing or dry solid blending methods.

Non-limiting examples of a suitable thermoplastics include (low density, linear low density, or high density) polyethylene, polypropylene, polystyrene, polyethylene terephthalate (PET), polybutylene terephthalate (PBT), nylon 6, nylon 6-6, nylon 6-12, nylon 11, nylon 12, nylon 4-6, polymethylmethacrylate, polyethersulphone, polysulphone, polycarbonate, polyvinyl chloride (PVC), chlorinated polyvinyl chloride, thermoplastic polyurethane, ethylene vinyl acetate (EVA), Victrex PEEK^{™} polymers (such as oxy-1, 4-phenylenoeoxy-1, 4-phenylene-carbonyl-1, and/or 4-phenylene polymers), and acrylonitrile butadiene styrene polymers (ABS), and/or various other polymeric blends or alloys of the above materials and/or other thermoplastic polymers.

In certain embodiments, the compositions may contain from 1 to 95% by weight of the particulate solid, such as from 2% (e.g., 3%, 4%, 5%, 6%, 7%, 8%, 9%, 10%, 12%, 14%, 16%, 18%, 20%, 25%, 30%, 35%, 40%, or 45%) to 90% (e.g., 85%, 80%, 75%, 70%, 65%, 60%, 55%, or 50%) by weight, based on the total weight of the composition. For example, a composition in which the solid is an organic material, such as an organic pigment, may contain from 15 wt. % to 60 wt. % of the solid, based on the total weight of the composition, whereas a composition in which the solid is an inorganic material, such as an inorganic pigment, filler or extender, may contain from 40 wt. % to 90 wt. % of the solid, based on the total weight of the composition.

The compositions described herein may include one or more other ingredients such as at least one of antifogging agents, nucleators, blowing agents, flame retardants, process aids, surfactants, heat stabilizers, UV absorbers, fragrances, anti-microbial agents, biocides, impact modifiers, antioxidants, antistatic agents, coupling agents, foaming agents, mold-release agents, lubricants (external and internal), plasticizers, slip agents, UV stabilizers, viscosity depressants, dispersants other than the polymers of the present subject matter, and air-release agents.

The thermoplastic polymer/resin compositions described herein may be prepared by any methods known for preparing thermoplastic compositions. Thus, for example, a solid, thermoplastic polymer, and a dispersant may be mixed in any order, the mixture then being subjected to a mechanical treatment to reduce the particles of the solid to an appropriate size, for example, by Banbury mixing, ribbon blending, twin-screw extrusion, twin-roll milling, compounding in a Buss co-kneader, or similar equipment.

In certain embodiments, the compositions described herein may comprise (a) 0.1 to 50 wt. %, or 0.25 to 35 wt. %, and 0.5 to 30 wt. % of the polymer described above; (b) up to 90 wt. % (such as greater than 0 to 90 wt. %, or 0.1 wt. % to 90 wt. %, or 1 wt. % to 90 wt. %) of an amorphous poly-α-olefin, such as a polyethylene/ polypropylene mixture; (c) up to 90 wt. % (such as greater than 0 to 90 wt. %, or 0.1 wt. % to 90 wt. %, or 1 wt. % to 90 wt. %) of a wax, such as a polyolefin wax, for example a polyethylene wax; (d) up to 30 wt. % (such as greater than 0 to 30 wt. %, or 0.1 wt. % to 30 wt. %, or 1 wt. % to 30 wt. %) of a crystalline polyolefin; and (e) up to 75 wt. % (such as greater than 0 to 75 wt. %, or 0.1 wt. % to 75 wt. %, or 1 wt. % to 75 wt. %) of a hydrogenated castor oil wax. In certain embodiments, at least one of (b) or (c) is present in an amount of at least 0.1 wt. %.

The polyolefin wax (such as a polyethylene wax) may be a carrier, co-agent or synergist.

In certain embodiments, provided are micronized compositions. In one embodiment, the compositions comprising at least one of (i) an amorphous poly-α-olefin, or (ii) a polyolefin wax, have a particle size fraction of at least 10 wt. % having a diameter of 1 mm or less, or 0.5 mm or less, or 0.1 mm or less, or 0.05 mm or less. In certain embodiments, the particle size fraction may be 50 nm to 1 mm, or 100 nm to 0.05 mm.

A suitable use of the polymers described herein may be in the production of dispersible solids in powder particle and/or fiber particle form, particularly of dispersible pigments or polymeric fillers, where the particles are coated with the dispersant. Coatings of this kind, of both organic and inorganic solids, are carried out in a known way, for example as described in EP-A-0 270 126. In this case a solvent or emulsion medium may either be removed or remain in the mixture, forming pastes. These pastes are customary commercial products and may further comprise binder fractions and also further auxiliaries and additives. In the case of pigments it is possible to coat the pigment surface during or after the synthesis of the pigments, by, for example, adding the polymers described herein to a pigment suspension, or during or after the operation of pigment finish. Pigments pretreated in this way are notable for greater ease of incorporation and also for enhanced viscosity, flocculation and gloss performance and for higher colour strength, as compared with untreated pigments.

Other suitable uses of the polymers described herein include dispersants for paints, inks, and coatings, or in any other products in which the polymers may be suitably used as dispersants.

The compositions described herein may be treated as a "master batch", and added to additional polymeric material when forming fabricated articles. The amount of "master batch" which is mixed with the additional polymeric material may vary over wide limits depending on the nature of polymeric material and the particulate solid. In different embodiments, the amount of "master batch" may be 0.5 to 50%, or 10 to 50%, or 20 to 50%, based on the total weight of the final plastic article. Although the plastic material used in preparing the "master batch" may differ from the further plastic material to which the "master batch" is added, but may be the same, depending on the desired final material. The use of "master batches" is especially useful where the plastic material includes polypropylene, polyethylene, polyethylene/polypropylene diene, ethyl vinyl acetate, polychloroprene, chlorinated polyethylene, chlorosulphonated polyethylene, poly vinyl chloride, natural and synthetic rubber such as butadiene-based elastomers (for instance butadiene-styrene, butadiene-acrylonitrile rubbers, polybutadiene), polyisoprene or natural rubber.

### EXAMPLES

The subject matter disclosed herein may be better understood with reference to the following examples, which are set forth merely to further illustrate the subject matter disclose herein. The illustrative examples should not be construed as limiting the subject matter in any manner.

Comparative Example 1 ("CE1"): Behenic acid (178.94 g) and hexamethylene diamine (30.53 g) (preheated to 50 °C) are charged to a 500 ml 3 neck round bottom flask and the contents are heated to 140 °C with overhead stirring and a nitrogen atmosphere. Zirconium IV butoxide (~80% in tert-butanol) (0.6 g) is added and the reaction temperature is increased to 180 °C and held for 5 hours. A hard off-white solid (180 g) is obtained. IR analysis indicates amide peaks at 1644 cm⁻¹, 1634cm⁻¹ and an amide N-H stretch at 3312 cm⁻¹. Comparative Example 1 is Example 9 from US 2011/0041730 A1, and all information regarding this example is incorporated by reference herein.

Example 1 ("EX1"): 101.70 parts behenic acid (component B) and 68.47 parts of a di-amine terminated polypropylene (component A) (average molecular weight of 400, measured base equivalence of 229.31) (Jeffamine D400 from Huntsman) were charged to a reaction vessel under nitrogen and heated to 100 °C to melt and allowed to react for one hour. The reaction setup was then adjusted to allow for removal of water and the reaction temperature was increased to 120 °C for one hour. Then 1.02 parts zirconium butoxide solution (80% butanol) were charged and the reaction temperature was increased to 180 °C for 19 hours. Then the reaction was stopped and material poured off and cooled to yield a brown solid with an acid value of 7.11 mg KOH/g and a base equivalence of 19447.47. The resulting solid was ground in a coffee grinder and sieved through a 1.7 mm sieve to yield a light brown powder. In this Example, with reference to formula (1), n is 2 and component A is bonded to component B via amide linkages.

Example 2 ("EX2"): 100.44 parts 12-hydroxystearic acid (component B) and 64.01 parts bis (3-aminopropyl) terminated poly(tetrahydrofuran) (component A) were charged to a reaction vessel under nitrogen and heated to 100 °C to melt and allowed to react for one hour. The reaction setup was then adjusted to allow for removal of water and the reaction temperature was increased to 120 °C for one hour. Then 0.99 parts zirconium butoxide solution (80% butanol) were charged and the reaction temperature was increased to 180 °C for 19 hours. Then the reaction was stopped and material poured off and cooled to yield a brown solid with an acid value of 6.06 mg KOH/g and a base equivalence of 12802.14. The resulting solid was ground in a coffee grinder and sieved through a 1.7 mm sieve to yield a light brown powder. In this Example, with reference to formula (1), n is 2 and component A is bonded to component B via amide linkages.

Example 3 ("EX3"): 93.88 parts stearic acid (component B) and 48.4 parts of a triamine terminated polypropylene (component A) (average molecular weight of 440, and measured base equivalence of 155.61) (Jeffamine T403 from Huntsman) were charged to a reaction vessel under nitrogen with a setup to allow for removal of water and heated to 120 °C for one-half hour. Then 0.52 parts zirconium butoxide solution (80% butanol) were charged and the reaction temperature was increased to 180 °C for 18 hours. Then the reaction was stopped and material poured off and cooled to yield a brown solid with an acid value of 8.55 mg KOH/g and a base equivalence of 8946.51. The resulting solid was ground in a coffee grinder and sieved through a 1.7 mm sieve to yield a light brown powder. In this Example, with reference to formula (1), n is 3 and component A is bonded to component B via amide linkages.

Example 4 ("EX4"): 34.44 parts lauric acid (component B) and 92.07 parts of a diamine terminated mixed poly(propylene/ethylene) (component A) (average molecular weight of 900, measured base equivalence of 535.48) (Jeffamine ED900 from Huntsman) were charged to a reaction vessel under nitrogen and heated to 100 °C to melt and allowed to react for one hour. The reaction setup was then adjusted to allow for removal of water and the reaction temperature was increased to 120 °C for 20 minutes. Then 0.76 parts zirconium butoxide solution (80% butanol) were charged and the reaction temperature was increased to 180 °C for 17 hours. Then the reaction was stopped and material poured off and cooled to yield a dark brown liquid with an acid value of 10.73 mg KOH/g and a base equivalence of 15415.74. In this Example, with reference to formula (1), n is 2 and component A is bonded to component B via amide linkages.

Example 5 ("EX5"): 109.10 parts of a mixed fatty anhydride (component B, mixture of 50% octadecenyl Succinic anhydride and 50% hexadecenyl succinic anhydride) and 49.08 parts of a tri-amine terminated polypropylene (component A) (average molecular weight of 440, and measured base equivalence of 155.61) (Jeffamine T403 from Huntsman) were charged to a reaction vessel under nitrogen and heated to 70 °C and allowed to react for 3 hours. The reaction setup was then adjusted to allow for removal of water and the reaction temperature was increased to 120 °C for one hour. Then 0.95 parts zirconium butoxide solution (80% butanol) were charged and the reaction temperature was increased to 150 °C for 26 hours. Then an additional 0.95 parts zirconium butoxide solution (80% butanol) were charged and the reaction temperature was increased to 180 °C for 23 hours. Then the reaction was stopped and material poured off and cooled to yield a dark brown liquid with an acid value of 15.83 mg KOH/g and a base equivalence of 15578.41. In this Example, with reference to formula (1), n is 3 and A is bonded to B via imide linkages.

### Testing

7.5 parts of each example above were mixed with 30 parts of blue pigment (Heliogen Blue K6911 from BASF) and 62.5 parts nylon 6 (Akulon k222-D from DSM) on a WAB tubular mixer to prepare samples for extrusion. These samples were then extruded in a 16 mm twin screw extruder at a screw speed of 100 rpm and a feed rate of 12% (8% for EX4 and EX5) with the following temperature profile: 170 °C in zone 1 (feed), 230 °C in zone 2, 240 °C in zone 3, 240 °C in zone 4 and 240 °C in zone 5 (die); to produce a master batch. Each master batch was then let down into nylon 6 (Akulon k222-D from DSM) and titanium dioxide white pigment (Tioxide^{®} R-FC5 from Huntsman) to give a final composition of 0.5 % blue pigment and 5% white pigment in nylon 6, which was done on a Betol single screw extruder and then injection molded using BOY15S to produce color chips. Each color chip's color strength was then measured on a Datacolor 550 spectrophotometer (reflectance), and the results are provided in Table 1, below.

**Table 1**

| Sample | Color Strength |
|---|---|
| Control | 100* |
| CE1 | 144.23 |
| EX1 | 229.42 |
| EX2 | 178.20 |
| EX3 | 157.90 |
| EX4 | 156.60 |
| EX5 | 187.41 |

| | |
|---|---|
| *Control sample made as above but replacing the 7.5 parts of dispersant additive with additional 7.5 parts of nylon 6 | |

## Claims

1. A composition comprising a particulate solid, a plastic material and a polymer represented by formula (1):
A-(B)ₙ (1)
wherein:
A is a residue of a polyether having a polyether segment and 2 or 3 amine groups; wherein the polyether segment is derived from monomers of at least one of ethylene oxide, propylene oxide, or tetrahydrofuran; wherein the polyether segment has a number average molecular weight of from 160 to 2000; and wherein the amine groups are primary or secondary;
each B is independently a residue of a C₆-C₅₀ fatty acid or fatty acid anhydride, which is linear or branched, and which is saturated or unsaturated; and
n is 2 or 3;
wherein each B is independently bound to A by an amide bond or a cyclic imide group.

2. The composition of claim 1, wherein the plastic material is a thermoplastic polymer.

3. The composition of either of claim 1 or claim 2, wherein the particulate solid is at least one of a pigment, an extender, a filler, a flame-retardant material, a ceramic material, a magnetic material, or metal particles.

4. The composition of any one of claims 1 to 3, wherein the particulate solid is present in the composition in an amount of 1 wt. % to 95 wt. %, based on the total weight of the composition.

5. The composition of any one of claims 1 to 4, wherein the polymer of formula (1) is present in an amount of 0.1 wt. % to 50 wt. %, based on the total weight of the composition.

6. The composition of any one of claims 1 to 5, wherein the polymer of formula (1) has an acid value of less than 20 mg KOH/g.

7. The composition of any one of claims 1 to 6, wherein the polymer of formula (1) has an amine value of less than 10 mg KOH/g.

8. Use of a polymer represented by formula (1) as a dispersant in a composition further comprising a particulate solid and a plastic material:
A-(B)ₙ (1)
wherein:
A is a residue of a polyether having a polyether segment and 2 or 3 amine groups; wherein the polyether segment is derived from monomers of at least one of ethylene oxide, propylene oxide, or tetrahydrofuran; wherein the polyether segment has a number average molecular weight of from 200 to 2000; and wherein the amine groups are primary or secondary;
each B is independently a residue of a C₆-C₅₀ fatty acid or fatty acid anhydride, which is linear or branched, and which is saturated or unsaturated; and
n is 2 or 3;
wherein each B is independently bound to A by an amide bond or a cyclic imide group.

## Patentansprüche

1. Zusammensetzung, umfassend einen teilchenförmigen Feststoff, ein Kunststoffmaterial und ein Polymer, die durch die Formel (1) dargestellt ist:
A-(B)n (1)
wobei:
A ein Rest eines Polyethers ist, der ein Polyethersegment und 2 oder 3 Amingruppen aufweist; wobei das Polyethersegment von Monomeren von mindestens einem von Ethylenoxid, Propylenoxid oder Tetrahydrofuran abgeleitet ist; wobei das Polyethersegment ein zahlenmittleres Molekulargewicht von 160 bis 2000 aufweist; und wobei die Amingruppen primär oder sekundär sind;
jedes B unabhängig ein Rest einer C₆-C₅₀-Fettsäure oder eines Fettsäureanhydrids ist, das linear oder verzweigt ist und das gesättigt oder ungesättigt ist; und
n 2 oder 3 ist;
wobei jedes B unabhängig an A durch eine Amidbindung oder eine cyclische Imidgruppe gebunden ist.

2. Zusammensetzung nach Anspruch 1, wobei das Kunststoffmaterial ein thermoplastisches Polymer ist.

3. Zusammensetzung nach Anspruch 1 oder 2, wobei der teilchenförmige Feststoff mindestens eines von einem Pigment, einem Streckungsmittel, einem Füllstoff, einem flammhemmenden Material, einem keramischen Material, einem magnetischen Material oder Metallteilchen ist.

4. Zusammensetzung nach einem der Ansprüche 1 bis 3, wobei der teilchenförmige Feststoff in der Zusammensetzung in einer Menge von 1 Gew.-% bis 95 Gew.-%, bezogen auf das Gesamtgewicht der Zusammensetzung, vorhanden ist.

5. Zusammensetzung nach einem der Ansprüche 1 bis 4, wobei das Polymer der Formel (1) in einer Menge von 0,1 Gew.-% bis 50 Gew.-%, bezogen auf das Gesamtgewicht der Zusammensetzung, vorhanden ist.

6. Zusammensetzung nach einem der Ansprüche 1 bis 5, wobei das Polymer der Formel (1) einen Säurewert von weniger als 20 mg KOH/g aufweist.

7. Zusammensetzung nach einem der Ansprüche 1 bis 6, wobei das Polymer der Formel (1) einen Aminwert von weniger als 10 mg KOH/g aufweist.

8. Verwendung eines Polymers, das durch Formel (1) dargestellt wird, als ein Dispergiermittel in einer Zusammensetzung, ferner umfassend einen teilchenförmigen Feststoff und ein Kunststoffmaterial:
A-(B)n (1)
wobei:
A ein Rest eines Polyethers ist, der ein Polyethersegment und 2 oder 3 Amingruppen aufweist; wobei das Polyethersegment von Monomeren von mindestens einem von Ethylenoxid, Propylenoxid oder Tetrahydrofuran abgeleitet ist; wobei das Polyethersegment ein zahlenmittleres Molekulargewicht von 200 bis 2000 aufweist; und wobei die Amingruppen primär oder sekundär sind;
jedes B unabhängig ein Rest einer C₆-C₅₀-Fettsäure oder eines Fettsäureanhydrids ist, das linear oder verzweigt ist und das gesättigt oder ungesättigt ist; und
n 2 oder 3 ist;
wobei jedes B unabhängig an A durch eine Amidbindung oder eine cyclische Imidgruppe gebunden ist.

## Revendications

1. Composition comprenant un solide particulaire, une matière plastique et un polymère représenté par la formule (1) :
A-(B)ₙ (1)
dans laquelle :
A est un résidu d'un polyéther ayant un segment polyéther et 2 ou 3 groupes amine ; dans laquelle le segment polyéther est dérivé de monomères d'au moins un parmi l'oxyde d'éthylène, l'oxyde de propylène ou le tétrahydrofurane ; dans laquelle le segment polyéther a un poids moléculaire moyen en nombre allant de 160 à 2000 ; et dans laquelle les groupes amine sont primaires ou secondaires ;
chaque B est indépendamment un résidu d'un acide gras ou anhydride d'acide gras en C₆-C₅₀, qui est linéaire ou ramifié, et qui est saturé ou insaturé ; et
n est égal à 2 ou 3 ;
dans laquelle chaque B est indépendamment lié à A par une liaison amide ou un groupe imide cyclique.

2. Composition selon la revendication 1, dans laquelle la matière plastique est un polymère thermoplastique.

3. Composition selon la revendication 1 ou la revendication 2, dans laquelle le solide particulaire est au moins un parmi un pigment, un diluant, une charge, un matériau ignifuge, un matériau céramique, un matériau magnétique ou des particules métalliques.

4. Composition selon l'une quelconque des revendications 1 à 3, dans laquelle le solide particulaire est présent dans la composition en une quantité de 1 % en poids à 95 % en poids, sur la base du poids total de la composition.

5. Composition selon l'une quelconque des revendications 1 à 4, dans laquelle le polymère de formule (1) est présent en une quantité de 0,1 % en poids à 50 % en poids, sur la base du poids total de la composition.

6. Composition selon l'une quelconque des revendications 1 à 5, dans laquelle le polymère de formule (1) a un indice d'acide inférieur à 20 mg de KOH/g.

7. Composition selon l'une quelconque des revendications 1 à 6, dans laquelle le polymère de formule (1) a un indice d'amine inférieur à 10 mg de KOH/g.

8. Utilisation d'un polymère représenté par la formule (1) en tant que dispersant dans une composition comprenant en outre un solide particulaire et une matière plastique :
A-(B)ₙ (1)
dans laquelle :
A est un résidu d'un polyéther ayant un segment polyéther et 2 ou 3 groupes amine ; dans laquelle le segment polyéther est dérivé de monomères d'au moins un parmi l'oxyde d'éthylène, l'oxyde de propylène ou le tétrahydrofurane ; dans laquelle le segment de polyéther a un poids moléculaire moyen en nombre allant de 200 à 2000 ; et dans laquelle les groupes amine sont primaires ou secondaires ;
chaque B est indépendamment un résidu d'un acide gras ou anhydride d'acide gras en C₆-C₅₀, qui est linéaire ou ramifié, et qui est saturé ou insaturé ; et
n est égal à 2 ou 3 ;
dans laquelle chaque B est lié indépendamment à A par une liaison amide ou un groupe imide cyclique.
